# EUROPÄISCHE PATENTSCHRIFT

(11) **EP 2 758 196 B1**
(45) Veröffentlichungstag und Bekanntmachung des Hinweises auf die Patenterteilung: **26.02.2020**
(21) Anmeldenummer: 12812158.9
(22) Anmeldetag: 12.09.2012
(51) Int. Cl.: B22F 3/105, H05B 6/02

(54) **MULTIFREQUENTE INDUKTIONSERWÄRMUNG VON GENERATIV HERGESTELLTEN BAUTEILEN**
MULTI-FREQUENCY INDUCTION HEATING OF GENERATIVELY PRODUCED COMPONENTS
CHAUFFE PAR INDUCTION À FRÉQUENCES MULTIPLES DE PIÈCES OBTENUES PAR FABRICATION ADDITIVE

(30) Priorität: 22.09.2011 EP 11182335
(43) Veröffentlichungstag der Anmeldung: 30.07.2014
(73) Patentinhaber: MTU Aero Engines GmbH, 80995 München (DE)
(72) Erfinder: BAMBERG, Joachim, 85221 Dachau (DE); BAYER, Erwin, 85221 Dachau (DE); JAKIMOV, Andreas, 81245 München (DE); HANRIEDER, Herbert, 85411 Hohenkammer (DE); KOPPERGER, Bertram, 85221 Dachau (DE); SATZGER, Wilhelm, 80804 München (DE); HESS, Thomas, 81541 München (DE); DUSEL, Karl-Heinz, 85716 Unterschleissheim (DE); SCHNEIDERBANGER, Stefan, 85232 Bergkirchen (DE)
(86) Internationale Anmeldenummer: PCT/EP2012/003827
(87) Internationale Veröffentlichungsnummer: WO 2013/041195

(56) Entgegenhaltungen:
- EP-A1- 2 359 964
- WO-A1-2008/071165
- DE-A1-102004 022 385
- DE-A1-102009 051 479
- DE-U1-202009 012 628
- US-A- 5 088 047
- US-A- 5 805 971
- US-A1- 2002 158 054

## Beschreibung

### HINTERGRUND DER ERFINDUNG

### GEBIET DER ERFINDUNG

Die vorliegende Erfindung betrifft ein Verfahren zur Herstellung von Bauteilen durch ein generatives Herstellungsverfahren, insbesondere ein Verfahren mittels selektiven Bestrahlens eines Pulverbetts.

### STAND DER TECHNIK

Aus dem Stand der Technik sind generative Herstellungsverfahren zur schnellen Herstellung von Prototypen oder zur Herstellung von Bauteilen, die mit anderen Verfahren schwierig herzustellen sind, bekannt. Unter anderem werden hierfür Verfahren wie das selektive Laserschmelzen (SLM Selective Laser Melting) oder das direkte Metalllasersintern (DMLS Direct Metal Laser Sintering) eingesetzt. Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine.

Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO₂-Laser, Nd:YAG-Laser, Yb-Faserlaser sowie Diodenlaser, oder durch Elektronenstrahlen. Bei dem in der DE 10 2009 051 479 A1 beschriebenen Verfahren wird weiterhin das erzeugte Bauteil bzw. die Aufbau- und Fügezone auf eine Temperatur knapp unterhalb des Schmelzpunkts des Bauteilwerkstoffs mittels eines Zonenofens erwärmt, um eine gerichtet erstarrte oder einkristalline Kristallstruktur aufrechtzuerhalten.

Aus der DE 10 2004 022 385 A1 ist ebenfalls eine Vorrichtung und ein Verfahren zur schnellen Herstellung von Mikrokörpern bekannt, bei welchen zusätzlich zum selektiven Schmelzen oder Sintern von Partikeln mittels Laserstrahlen ein Magnetfeld im Bereich der Aufbau- und Fügezone zur Verdichtung der Partikel der aufgetragenen Schichten vorgesehen wird. Zudem ist eine Strahlungsheizung, die auf die Oberfläche der Partikel wirkt, zum Beispiel in Form einer leistungsstarken Halogenbeleuchtung und eine Heizung des Bauteilträgers vorgesehen.

Die EP 2 359 964 A1 offenbart ein Verfahren zum Herstellen eines 3-dimensionalen Bauteils mittels selektiven Laserschmelzens, wobei zur Erwärmung eine Induktionsspule Verwendung findet, die um das Bauteil seitlich angeordnet und angepasst ist.

Die WO 2008/071165 A1 beschreibt wiederum eine Vorrichtung und ein Verfahren zur Reparatur von Turbinenschaufeln von Gasturbinen mittels Pulverauftragsschweißen, wobei für die Auftragsschweißung eine Strahlungsquelle, wie ein Laser oder ein Elektronenstrahl, Verwendung findet. Zugleich wird über eine Induktionsspule eine Heizvorrichtung zur Beheizung der zu reparierenden Schaufel bereitgestellt.

Die US 2002/0158054 A1 offenbart ein Verfahren zum selektiven Lasersintern, wobei die Erwärmung des Pulverbetts bzw. des herzustellenden Bauteils über seitlich angebrachte Heizringe erfolgt.

Obwohl aus dem Stand der Technik somit bekannt ist, bei einem generativen Herstellverfahren, bei welchem Pulverpartikel mittels Bestrahlung zur Bildung eines Bauteils geschmolzen oder gesintert werden, zusätzlich eine Beheizung des Bauteils vorzusehen und diese zusätzliche Beheizung mittels induktiver Erwärmung zu realisieren, bestehen weiterhin Probleme derartige generative Herstellungsverfahren für Hochtemperaturlegierungen einzusetzen, die nicht schmelz- bzw. schweißbar sind, da es bei derartigen Legierungen häufig zu inakzeptablen Heißrissen kommt.

### OFFENBARUNG DER ERFINDUNG

### AUFGABE DER ERFINDUNG

Es ist deshalb Aufgabe der vorliegenden Erfindung ein Verfahren zur generativen Herstellung von Bauteilen aus zu Heißrissen neigenden Werkstoffen bereitzustellen, wobei gleichzeitig die geometrischen Gestaltungsfreiheiten des generativen Herstellungsprozesses möglichst wenig eingeschränkt werden sollen. Zudem soll das Verfahren einfach durchführbar und leicht betreibbar sein.

### TECHNISCHE LÖSUNG

Die oben bezeichnete Aufgabenstellung wird durch ein Verfahren mit den Merkmalen des Anspruchs 1 gelöst. Vorteilhafte Ausgestaltungen sind Gegenstand der abhängigen Ansprüche.

Der vorliegenden Erfindung liegt die Idee zu Grunde, dass durch die Verwendung von mindestens einer Spule an der zwei oder mehr Induktionswechselspannungen mit unterschiedlichen Frequenzen überlagert werden, eine gezielte induktive Erwärmung von Bereichen des hergestellten Bauteils möglich ist, sodass ausreichend hohe Temperaturen in den entsprechenden Bauteilbereichen erzielbar sind und gleichzeitig vermieden wird, dass der generative Herstellungsprozess durch die induktive Erwärmung eingeschränkt wird. Unter Wechselspannung wird hierbei jede Form einer geeigneten Induktionswechselspannung, wie eine Rechteckspannung, ZickZack-Spannung, eine asymmetrische Wechselspannung oder dergleichen verstanden.

Das generative Herstellungsverfahren kann durch das direkte Metalllasersintern oder das selektive Laserschmelzen realisiert sein. Ganz allgemein können jegliche energiereiche Strahlen, wie Laserstrahlen oder Elektronenstrahlen, zum selektiven Schmelzen und/oder Sintern von Pulverpartikeln in einem Pulverbett eingesetzt werden, um ein entsprechendes Bauteil herzustellen. Wesentlich ist lediglich, dass das hergestellte Bauteil zugleich induktiv erwärmt wird, wobei die Induktionseinrichtung mindestens eine Spule an der zwei oder mehr Induktionswechselspannungen mit unterschiedlichen Frequenzen überlagert werden, aufweist, um gezielt bestimmte Wirkungsbereiche einstellen zu können, um so eine ausreichende Erwärmung des hergestellten Bauteils, insbesondere in der Ebene, in der die nächste Schicht aufgebaut wird, zu erzielen, so dass Risse verursachende Temperaturgradienten oder Spannungen durch ungleichmäßige Abkühlungen vermieden werden können.

Für die Induktionserwärmung ist somit eine Induktionseinrichtung vorgesehen sein, die mindestens eine Spule aufweist, wobei an der Spule zwei oder mehr Induktionswechselspannungen mit unterschiedlichen Frequenzen überlagert werden können.

Daneben ist es auch möglich mehrere Spulen bereitzustellen, wobei die Spulen sowohl jeweils einzeln mit einzelnen Wechselspannungen beaufschlagt werden können, die wiederum unterschiedlich zueinander sind, als auch mehrere Spulen mit jeweils mehreren Wechselspannungen mit unterschiedlichen Frequenzen betrieben werden können. Insbesondere ist eine beliebige Kombination von einzelnen Spulen mit mehreren überlagerten Induktionswechselspannungen unterschiedlicher Frequenzen mit Spulen, bei denen jeweils nur eine Wechselspannung angelegt ist, möglich.

Darüber hinaus kann bei dem Verfahren und/oder bei der Vorrichtung die Anordnung einer einzelnen oder von mehreren Spulen so gewählt werden, dass keine Beeinträchtigung des generativen Herstellungsprozesses, also keine Beeinträchtigung der gestalterischen Freiheit bei der Herstellung des Bauteils gegeben ist.

Die mindestens eine Spule der Induktionseinrichtung kann oberhalb und/oder um das Pulverbett angeordnet werden, da durch die gezielte Auswahl der entsprechenden Anregungsfrequenzen eine gezielte Lokalisierung der Wirkungsbereiche möglich ist und somit ein unerwünschtes Aufschmelzen oder Sintern der Pulverpartikel im Pulverbett vermieden werden kann. Insbesondere können die einzelne oder mehrere Spulen nur teilweise oberhalb und/oder um das Pulverbett angeordnet sein, so dass entsprechende Windungen der Spulen sowohl oberhalb als auch unterhalb einer Bauebene, in der die nächste Schicht auf das herzustellende Bauteil aufgetragen wird, angeordnet sind.

Bei mehreren Spulen können diese entlang der Spulenachse, also der axialen Achse um welche die Windungen herum verlaufen, angeordnet werden, oder die Spulen können ineinander angeordnet sein, so dass also Windungen der einen Spule innerhalb der Windungen einer anderen Spule angeordnet sind, und zwar sowohl axial als auch radial.

Die Spulen können zumindest teilweise so oberhalb des Pulverbetts angeordnet sein, dass die entsprechende energiereiche Strahlung zumindest teilweise durch die Spule hindurch auf das Pulverbett gerichtet wird.

Bei der vorliegenden Erfindung wird ein Verfahren offenbart. Ebenfalls offenbart wird eine Vorrichtung, die zur Durchführung des Verfahrens geeignet ist. Diese Vorrichtung kann sämtliche Komponenten umfassen, die zur Durchführung des beschriebenen Verfahrens notwendig sind. Umgekehrt kann das Verfahren sämtliche Verfahrensschritte aufweisen, die durch die beschriebenen Komponenten der Vorrichtung möglich sind.

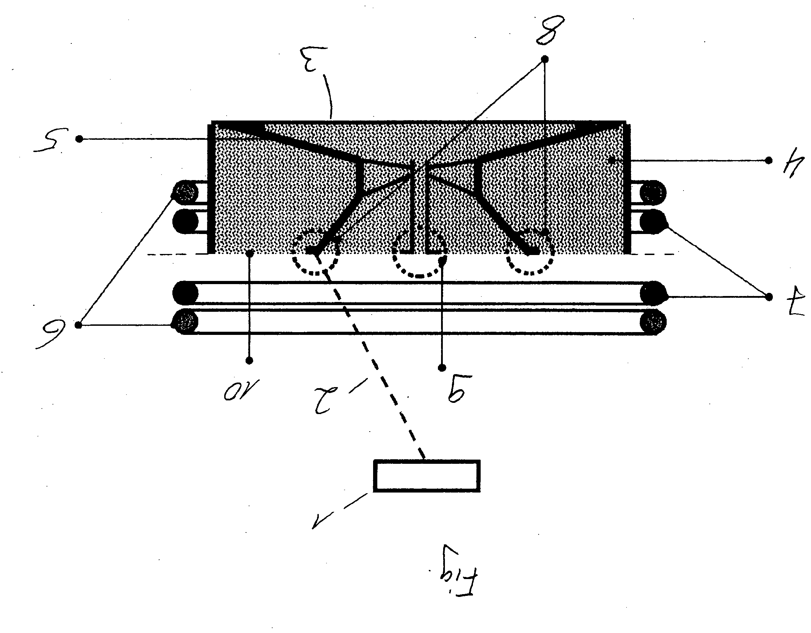

### KURZBESCHREIBUNG DER FIGUR

Die beigefügte Figur zeigt in rein schematischer Weise in einer seitlichen Schnittansicht eine geeignete Vorrichtung zur Herstellung von Bauteilen mittels eines generativen Herstellungsverfahrens.

### AUSFÜHRUNGSBEISPIEL

Die vorliegende Erfindung wird anhand des nachfolgend näher beschriebenen Ausführungsbeispiels für die Verwendung mindestens einer Spule detailliert erläutert, wobei für den Fachmann klar ist, dass die Erfindung nicht auf dieses Ausführungsbeispiel beschränkt ist.

Die Figur zeigt einen Laser 1, mit dem ein Laserstrahl 2 erzeugt werden kann, der über eine Fläche verfahrbar ist. Statt eines Laserstrahls 2 können auch andere Strahlungsarten, wie beispielsweise Elektronenstrahlen oder andere energiereiche Strahlen verwendet werden.

Der Laserstrahl 2 ist insbesondere über eine Fläche bewegbar, die durch die Bauebene 10 und den Pulverbehälter 3 definiert ist. Der Pulverbehälter 3 beinhaltet ein Pulverbett 4 aus einer Vielzahl von Pulverteilchen aus einem oder mehreren Werkstoffen, aus denen das zu erzeugende Bauteil 5 hergestellt werden soll. Beim Auftreffen des Laserstrahls 2 auf das Pulver in der Bauebene 10 werden die Pulverteilchen aufgeschmolzen oder so stark erwärmt, dass sie durch Sintern mit benachbarten Pulverteilchen und dem bereits erzeugten Bauteil 5 verbunden werden. Auf diese Weise kann Schicht für Schicht das Bauteil 5 aus dem Pulver des Pulverbetts 4 hergestellt werden. Zu diesem Zweck ist es lediglich erforderlich über dem bereits erzeugtem Bauteil 5 neue Pulverschichten anzuordnen und diese schichtweise zu einem Festkörper zu verschmelzen oder zu sintern. Dafür kann das Bauteil 5 schrittweise mit dem Boden des Pulverbehälters 3 abgesenkt werden, sodass eine neue Pulverschicht an der Oberseite des Pulverbetts aufgebracht werden kann.

Um zu vermeiden, dass das bereits hergestellte Bauteil 5 durch zu starke Temperaturdifferenzen beispielsweise durch Spannungsrisse oder Heißrisse geschädigt wird, wird das Bauteil 5 insbesondere in den durch gestrichelte Linien eingekreisten Wirkungsbereichen 8, 9 induktiv erwärmt. Hierzu sind zwei Spulen 6, 7 vorgesehen, die im Schnitt als Teilringe dargestellt sind. Die Spulen 6, 7 sind mit Hochfrequenzgeneratoren verbunden, die hochfrequente Wechselspannungen mit Frequenzen im Bereich von einigen Kilohertz bis zu einigen Megahertz erzeugen können. Durch die an den Spulen angelegte Wechselspannung bzw. die dadurch erzeugten Wechselströme werden in dem Bauteil 5 Wirbelströme induziert, die zu einer Erwärmung des Bauteils führen.

Durch die geeignete Anordnung der mindestens einen Spule(n) 6, 7, insbesondere oberhalb und/oder unterhalb der Bauebene 10 sowie die Wahl geeigneter Frequenzen für die angelegte Wechselspannung können die Wirkungsbereiche 8 und 9 gezielt eingestellt werden, sodass eine wirksame Erwärmung des Bauteils 5 in den kritischen Bauteilbereichen eingestellt werden kann, ohne dass es zu unerwünschten Aufschmelzungen oder Sinterereignissen im Pulverbett 4 kommt. Insbesondere durch die Verwendung mehrerer verschiedener Frequenzen für die Induktionsspannungen in den Spulen 6, 7 kann eine gezielte lokale Erwärmung des Bauteils 5 erreicht werden, ohne dass in anderen Bereichen, in denen eine Erwärmung nicht gewünscht ist, eine zu starke Erwärmung auftritt. Dies ermöglicht auch die Anordnung der Spulen 6, 7 um den Pulverbehälter 3 bzw. um das Pulverbett 4 herum, ohne dass die Gefahr besteht, dass der ganze Bauraum zu stark aufgeheizt wird und das darin befindliche Pulver sintert oder aufschmilzt. Gleichzeitig wird gewährleistet, dass die Gestaltungsfreiheit im Pulverbehälter 3 nicht durch eine entsprechende Anordnung der Spulen 6, 7 beeinträchtigt wird. Insbesondere können die Wirkungsbereiche 8, 9 im Bereich der Bauebene 10 erzeugt werden, sodass Temperaturgradienten auf den Bauteiloberflächen innerhalb der Bauebene 10 vermieden oder reduziert werden.

Statt den gezeigten Spulen 6 und 7, die jeweils mit unterschiedlichen Frequenzen der Induktionswechselspannung betrieben werden, kann erfindungsgemäß auch nur eine einzige Spule vorgesehen werden, wobei bei einer einzigen Spule ebenfalls eine Überlagerung von Wechselspannungen mit unterschiedlichen Frequenzen eingestellt werden kann, während bei mehreren Spulen eine Kombination von Spulen mit unterschiedlichen Induktionswechselspannungen und/oder die Überlagerung von Induktionswechselspannungen auf einzelnen oder allen Spulen möglich ist. Entsprechend der erforderlichen Wirkungsbereiche 8, 9, welche auch von der Geometrie des herzustellenden Bauteils 5 abhängen, können eine unterschiedliche Anzahl von Spulen mit unterschiedlichen Frequenzen von Induktionswechselspannungen eingesetzt werden und die Anordnung der Spulen ausgewählt werden.

Bei dem gezeigten Ausführungsbeispiel ist die Spule 6 so angeordnet, dass ihre Windungen oberhalb und unterhalb der Spule 7 angeordnet sind, sodass die Spulen 6 und 7 ineinander gestellt sind. Allerdings ist es auch denkbar, dass die Spulen bei Verwendung mehrerer Spulen hintereinander angeordnet werden, also beispielsweise entlang der Spulenachse, die senkrecht zur Bauebene 10 steht. Auch andere Anordnungen der Spule sind denkbar.

## Patentansprüche

1. Verfahren zur Herstellung von Bauteilen (5) mittels selektivem Bestrahlen eines Pulverbetts (4), bei welchem das hergestellte Bauteil (5) zugleich induktiv erwärmt wird,
**dadurch gekennzeichnet, dass**
- die Induktionserwärmung über eine Induktionseinrichtung erfolgt, die mindestens eine Spule aufweist an der zwei oder mehr Induktionswechselspannungen mit unterschiedlichen Frequenzen überlagert werden und
- die Strahlung Laserstrahlung oder Elektronenstrahlung ist, die durch die Spule zur induktiven Erwärmung hindurch auf das Pulverbett gerichtet wird.

2. Verfahren nach Anspruch 1,
**dadurch gekennzeichnet, dass**
die Spule so angeordnet ist, dass sie zumindest teilweise oberhalb einer Ebene (10) angeordnet ist, in welcher durch die Strahlung das Bauteil im Pulverbett erzeugt wird.

3. Verfahren nach Anspruch 1,
**dadurch gekennzeichnet, dass**
die Spule so angeordnet ist, dass sie zumindest teilweise um das erzeugte Bauteil herum angeordnet ist.

4. Verfahren nach einem der vorhergehenden Ansprüche,
**dadurch gekennzeichnet, dass**
die Anordnung der mindestens einen Spule zur induktiven Erwärmung und/oder die Auswahl der Frequenzen der Wechselspannungen so erfolgt, dass der Wirkungsbereich (8, 9) der induktiven Erwärmung im Bereich des erzeugten Bauteils liegt.

## Claims

1. A method for producing components (5) by means of selective irradiation of a powder bed (4), in which the component (5) produced is simultaneously inductively heated, **characterized in that**
- the induction heating takes place using an induction device
which has at least one coil on which two or more alternating induction voltages having different frequencies are superimposed, and
- the radiation is laser radiation or electron radiation, which is directed through the coil for inductive heating onto the powder bed.

2. The method according to claim 1, **characterized in that** the coil is arranged such that it is arranged at least in part above a plane (10) in which the component is produced in the powder bed by means of the radiation.

3. The method according to claim 1,
**characterized in that** the coil is arranged such that it is arranged at least in part around the produced component.

4. The method according to any of the preceding claims,
**characterized in that** the arrangement of the at least one coil for inductive heating and/or the selection of the frequencies of the alternating voltages take(s) place in such a way that the range of effectiveness (8, 9) of the inductive heating is in the region of the produced component.

## Revendications

1. Procédé de fabrication de pièces (5) par irradiation sélective d'un lit de poudre (4), dans lequel la pièce (5) fabriquée est simultanément chauffée par induction,
**caractérisé en ce que**
- le chauffage par induction est réalisé au moyen d'un dispositif d'induction qui comporte au moins une bobine sur laquelle sont superposées deux tensions alternatives d'induction ou plus, de fréquences différentes, et
- le rayonnement est un rayonnement laser ou un rayonnement électronique qui est dirigé à travers la bobine sur le lit de poudre pour le chauffage par induction.

2. Procédé selon la revendication 1,
**caractérisé en ce que** la bobine est disposée de manière à être disposée au moins partiellement au-dessus d'un plan (10) dans lequel le rayonnement réalise la pièce dans le lit de poudre.

3. Procédé selon la revendication 1,
**caractérisé en ce que** la bobine est disposée de manière à être disposée au moins partiellement autour de la pièce réalisée.

4. Procédé selon l'une des revendications précédentes,
**caractérisé en ce que** la disposition de l'au moins une bobine pour le chauffage par induction et/ou la sélection des fréquences des tensions alternatives a lieu de sorte que le champ d'action (8, 9) du chauffage par induction se situe dans la région de la pièce réalisée.
